# EUROPÄISCHE PATENTSCHRIFT

(11) **EP 0 884 951 B1**
(45) Veröffentlichungstag und Bekanntmachung des Hinweises auf die Patenterteilung: **07.11.2001**
(21) Anmeldenummer: 97902237.3
(22) Anmeldetag: 23.01.1997
(51) Int. Cl.: A22C 11/02

(54) **VERFAHREN UND VORRICHTUNG ZUM HERSTELLEN VERPACKTER LEBENSMITTEL MIT RAUCHGESCHMACK**
PROCESS AND DEVICE FOR PRODUCING PACKAGED FOODS WITH SMOKED FLAVOUR
PROCEDE ET DISPOSITIF POUR PRODUIRE DES PRODUITS ALIMENTAIRES CONDITIONNES PRESENTANT UN GOUT FUME

(30) Priorität: 04.03.1996 DE 19608001
(43) Veröffentlichungstag der Anmeldung: 23.12.1998
(73) Patentinhaber: Polyclip System Gmbh & Co.Kg, 60489 Frankfurt am Main (DE)
(72) Erfinder: HANTEN, Jürgen, D-33519 Rockenberg (DE)
(74) Vertreter: Fischer, Ernst, Dr.
(86) Internationale Anmeldenummer: EP9700359
(87) Internationale Veröffentlichungsnummer: WO9732482

(56) Entgegenhaltungen:
- EP-A- 0 068 578
- WO-A-83/02387
- FR-A- 2 723 292
- US-A- 3 066 461
- US-A- 4 949 430
- US-A- 4 958 412
- US-A- 5 030 464
- US-A- 5 484 001
- US-E- R E28 281

## Beschreibung

Die Erfindung betrifft ein Verfahren zum Herstellen verpackter Lebensmittel mit Rauchgeschmack, insbesondere Wurst, bei dem das Verpackungsmaterial eine Flüssigrauch-Beschichtung aufweist, sowie eine Vorrichtung zur Durchführung dieses Verfahrens.

Geräucherte Lebensmittel in Wurstform können auf verschiedene Art und Weise hergestellt werden: Beim vermutlich ältesten Verfahren befinden sich die Lebensmittel, z.B. Fleischbrät für Wurst oder auch Käse, in einer gasdurchlässigen Hülle. In einer Rauchkammer wird das verpackte Lebensmittel Rauch ausgesetzt, der durch die Hülle in das Lebensmittel eindringen kann. Bei neueren Verfahren wird Flüssigrauch verwendet, mit dem das gasdurchlässig verpackte Lebensmittel besprüht oder dessen sowohl flüssigkeits- als auch gasdurchlässiges Verpackungsmaterial imprägniert wird (EP-OS 121 924), so daß er anschließend ebenfalls in das Lebensmittel eindringen kann. Auch ist es möglich, das verpackte Lebensmittel in Flüssigrauch einzutauchen. Hierbei ist allerdings die Dosierung problematisch und der anschließende Trocknungsvorgang sehr aufwendig.

Den erwähnten Verfahren haften einzeln oder gemeinsam verschiedene Nachteile an, die das Herstellen von Lebensmitteln mit Rauchgeschmack erschweren oder verteuern. Beispielsweise sind spezielle Rauchkammern nötig, in denen das verpackte Lebensmittel dem Rauch ausgesetzt oder mit ihm besprüht wird. Im Falle des Tauchens wird ein Tauchbecken benötigt, und es ist ein aufwendiger Trocknungsvorgang erforderlich. Hinzu kommt ein weiterer, wesentlicher Nachteil des gesamten Standes der Technik: Bei allen bekannten Verfahren muß die Hülle gasdurchlässig sein, damit der (Flüssig-) Rauch in das Lebensmittel eindringen kann, mit der Folge, daß die Haltbarbeit des verpackten Lebensmittels beispielsweise aufgrund möglicherweie eindringender Keime eingeschränkt ist. Auch kann das Lebensmittel leicht austrocknen. Dem kann beim derzeitigen Stand der Technik nur durch eine zweite, gasundurchlässige Verpackung begegnet werden.

Es ist ferner aus der US-PS 5,484,001 bekannt, vor dem Befüllen einer Verpakkungshülle mit Wurstbrät u. dgl. diese innenseitig mit Flüssigrauch zu beschichten. Dieses Verfahren und die zu seiner Durchführung vorgesehene Vorrichtung setzen aber eine Verpackungshülle in Form eines bis auf eine Einfüllöffnung geschlossenen Behälters, etwa in Form eines Beutels voraus. Deshalb kann die Beschichtung nur intermittierend erfolgen, und sowohl das bekannte Verfahren als auch die hierfür vorgeschlagene Vorrichtung sind für einen kontinuierlichen Prozeß ungeeignet.

Hinzu kommt, daß die Beschichtungsdicke nicht originär dosiert werden kann, weil sie nicht nur von der eingebrachten Menge, sondern auch von der Anpreßkraft der Rolle und der Foliendicke des Verpackungsbeutels abhängig ist. Die Folge ist eine unterschiedliche Auftragsmenge und daher zwangsläufig eine unterschiedliche Stärke des Rauchgeschmacks, den das Füllgut annimmt.

Es ist daher die der Erfindung zugrunde liegende Aufgabe, Mittel und Wege zur Verfügung zu stellen, mit denen sich Lebensmittel mit Rauchgeschmack von bestimmter Intensität auf einfache und billige Weise sowie kontinuierlich herstellen lassen.

Erfindungsgemäß besteht die Lösung dieser Aufgabe zum einen in einem Verfahren, bei dem vor dem Einfüllen des Verpackungsgutes auf die Innenfläche des Verpackungsmaterials eine Flüssigrauch-Beschichtung aufgebracht wird, und welches sich dadurch auszeichnet, daß der Flüssigrauch auf zunächst bandförmiges Verpackungsmaterial aufgebracht und anschließend das Verpackungsmaterial zu einem Schlauch geschlossen wird, welcher schließlich mit Füllgut befüllt wird.

Nach dem Befüllen der Hülle kommt das mit Rauchgeschmack zu versehene Lebensmittel mit dem Flüssigrauch in Berührung, so daß er in das Lebensmittel diffundieren kann. Bei diesem Verfahren ist das gleichmäßige Beschichten des Verpackungsmaterials deswegen relativ einfach und sicher, weil es zum Beschichten flach aufgespannt ist.

Die Hülle kann aus gas- und flüssigkeitsundurchlässigem Material bestehen, was die wesentlichen Vorteile mit sich bringt, daß das allein mit der Hülle verpackte Lebensmittel bereits vor dem Eindringen von Keimen geschützt ist und somit länger haltbar ist und außerdem nicht so leicht austrocknen kann.

Die erfindungsgemäße Vorrichtung mit einem das schlauchförmige Verpackungsgut führenden Füllrohr sowie mit Mitteln zum Auftragen der Flüssigrauchschicht auf eine Fläche des Verpackungsmaterials zeichnet sich dadurch aus, daß koaxial mit der Auslaßöffnung des Füllrohres eine bandförmiges Verpackungsmaterial zu einem das Füllrohr konzentrisch umgebenden Schlauch formende und zur Auslaßöffnung hin fördernde Schlauchbildungsstation vorgesehen und dieser unmittelbar eine Beschichtungsstation vorgeschaltet ist.

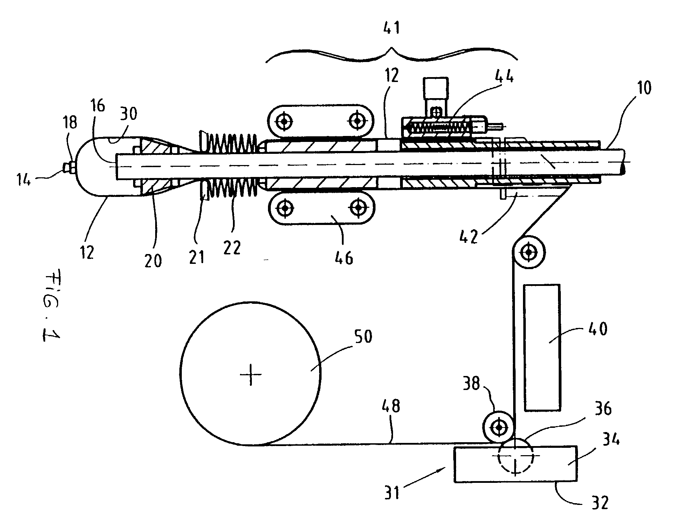

Die Erfindung soll nun anhand der Zeichnung erläutert werden, welche im Längsschnitt eine Vorrichtung zum Herstellen von wurstartigen Lebensmitteln mit Rauchgeschmack zeigt, bei der zunächst bandförmiges Verpackungsmaterial mit Flüssigrauch beschichtet und die Flüssigrauchschicht ggf. getrocknet wird, bevor das Verpackungsmaterial zum Schlauch verarbeitet und befüllt wird.

Einige Bestandteile dieser Vorrichtung sind beim Stand der Technik üblich: ein Füllrohr 10, das an seinem vorderen Ende von einer schlauchförmigen Wursthülle 12 umgeben ist; ein Ende 14 der Wursthülle 12 befindet sich dabei vor der Auslaßöffnung 16 des Füllrohres 10 und ist mit Hilfe eines Clips 18 verschlossen; zwischen der schlauchförmigen Wursthülle 12 und dem Füllrohr 10 befindet sich, kurz vor der Auslaßöffnung 16, eine Innendarmbremse 20, während eine Außendarmbremse 21 in Vorschubrichtung davor angeordnet ist.

Zum Befüllen der Wursthülle wird Füllgut durch das Füllrohr 10 gepreßt und tritt aus dessen Auslaßöffnung 16 aus. Dabei füllt es die zu Beginn leere Wursthülle 12 und zieht mit zunehmender Füllung derselben weitere Wursthülle aus einem Puffervorrat 22 gegen den Widerstand der Darmbremse 20 und 21 so lange nach, bis eine Wurst der gewünschten Länge gefüllt ist. Dann wird der Füllvorgang unterbrochen, eine Teillänge der Wursthülle 12 durch Zusammendrücken und Verschließen abgeteilt und von der übrigen Wursthülle 12 abgetrennt. Gleichzeitig wird das vor der Auslaßöffnung 16 befindliche Ende der Wursthülle 12 verschlossen, so daß die folgende Wurst auf die gleiche Weise wie die vorangegangene produziert werden kann.

Der wesentliche Unterschied gegenüber dem Stand der Technik besteht bei der in der Zeichnung abgebildeten Wursthülle 12 darin, daß diese auf ihrer Innenseite 30 mit Flüssigrauch beschichtet ist, der erst kurz vor dem Befüllen aufgebracht wurde. Die zum Beschichten der Hüllen-Innenseite 30 dienende Beschichtungsstation 31 weist ein Vorratsbecken 32 auf, welches mit Flüssigrauch 34 gefüllt ist. In dem Vorratsbecken 32 ist eine Auftragswalze 36 angeordnet, welche teilweise in den Flüssigrauch 34 eintaucht. Gegenüber der Auftragswalze 36 befindet sich eine Gegenwalze 38. Weiterhin ist eine Trocknungsvorrichtung 40, die beispielsweise die Form eines Wärmeradiators hat, vorgesehen. Hinzu kommen eine Formschulter 42, eine Schweißstation 44 und ein Förderwerk 46, welche gemeinsam eine Schlauchbildungsstation 41 bilden.

Die schlauchförmige, mit Flüssigrauch beschichtete Wursthülle 12 wird bei der abgebildeten Vorrichtung aus zunächst bandförmiger Flachfolie 48 hergestellt. Diese Flachfolie 48 wird kontinuierlich von einer Folienrolle 50 abgezogen und zwischen der Auftragswalze 36 sowie der Gegenwalze 38 hindurchgeführt. Dabei wälzt die Auftragswalze 36 auf einer Seite der Flachfolie 48 ab und benetzt diese mit Flüssigrauch. Die Flachfolie 48 wird weiterhin mit ihrer mit Flüssigrauch benetzten Seite an der Trocknungseinrichtung 40 vorbeigeführt, so daß die Flüssigrauch-Beschichtung auf der Flachfolie 48 getrocknet wird. Anschließend wird die mit der getrockneten Flüssigrauch-Beschichtung versehene Flachfolie 48 der Formschulter 42 zugeführt, wo die Flachfolie 48 zum Schlauch geformt wird, indem die beiden Folienkanten zusammengeführt werden. Die beiden Folienkanten werden anschließend in der Schweißstation 44 miteinander verschweißt, so daß schließlich ein die Wursthülle 12 bildender, dichter Schlauch entsteht, dessen Innenseite mit Flüssigrauch beschichtet ist.

Die gerade verschweißte Wursthülle wird von dem Förderwerk 46 in den Puffervorrat 22 befördert. Dabei wird ständig Flachfolie 48 nachgezogen und von der Folienrolle 50 abgewickelt.

## Patentansprüche

1. Verfahren zum Herstellen verpackter Lebensmittel mit Rauchgeschmack, insbesondere Wurst, bei dem vor dem Einfüllen des Verpackungsgutes auf die Innenfläche des Verpackungsmaterials eine Flüssigrauch-Beschichtung aufgebracht wird,
**dadurch gekennzeichnet, daß** der Flüssigrauch auf zunächst bandförmiges Verpackungsmaterial aufgebracht und anschließend das Verpackungsmaterial zu einem Schlauch geschlossen wird, welcher schließlich mit Füllgut befüllt wird.

2. Verfahren nach Anspruch 1,
**dadurch gekennzeichnet, daß** die Flüssigrauchschicht nach dem Auftragen und vor der Schlauchbildung getrocknet wird.

3. Verfahren nach Anspruch 1 oder 2,
**dadurch gekennzeichnet, daß** das Verpackungsmaterial gasundurchlässig ist.

4. Vorrichtung zur Durchführung des Verfahrens nach Anspruch 1 mit einem das schlauchförmige Verpackungsgut führenden Füllrohr sowie mit Mitteln zum Auftragen der Flüssigrauchschicht auf eine Fläche des Verpackungsmaterials,
**dadurch gekennzeichnet, daß** koaxial mit der Auslaßöffnung (16) des Füllrohres (10) eine bandförmiges Verpackungsmaterial (48) zu einem das Füllrohr konzentrisch umgebenden Schlauch (12) formende und zur Auslaßöffnung (16) hin fördernde Schlauchbildungsstation (41) vorgesehen und dieser unmittelbar eine Beschichtungsstation (31) vorgeschaltet ist.

5. Vorrichtung nach Anspruch 4,
**dadurch gekennzeichnet, daß** zwischen der Schlauchbildungsstation (41) und der Beschichtungsstation (31) eine Trockungsvorrichtung (40) angeordnet ist.

## Claims

1. A method of producing packaged foodstuffs with smoke flavor, in particular sausage, wherein prior to filling in the charge a coating of liquid smoke is applied onto the inner surface of the packaging material,
**characterized in that** the liquid smoke is applied onto an initially strip-shaped packaging material and subsequently the packaging material is closed to form a tube which finally is filled with filling.

2. The method as claimed in claim 1,
**characterized in that** the layer of liquid smoke is dried upon applying the same and before forming a tube.

3. The method as claimed in claim 1 or 2,
**characterized in that** the packaging material is impermeable to gas.

4. An apparatus for performing the method as claimed in claim 1 comprising a filling tube carrying the tubular packaging material as well as means for applying the layer of liquid smoke onto a surface of the packaging material,
**characterized in that** coaxially with the outlet opening (16) of the filling tube (10) a tube forming station (41) is provided, which forms strip-shaped packaging material (48) to obtain a tube (12) concentrically surrounding the filling tube and conveys said strip-shaped packaging material towards the outlet opening (16), and directly before said tube forming station a coating station (31) is disposed.

5. The apparatus as claimed in claim 4,
**characterized in that** between the tube forming station (41) and the coating station (31) a drying device (40) is disposed.

## Revendications

1. Procédé pour fabriquer des produits alimentaires conditionnés ayant un goût fumé, en particulier des saucisses, dans lequel, avant l'embossage, on applique sur la surface intérieure du matériau d'emballage un revêtement de fumée liquide, **caractérisé en ce que** la fumée liquide est appliquée sur le matériau d'emballage, qui d'abord se présente sous forme d'une bande, puis le matériau d'emballage est obturé pour donner un boyau, lequel est finalement rempli de la farce.

2. Procédé selon la revendication 1, **caractérisé en ce que** la couche de fumée liquide est séchée après application et avant formation du boyau.

3. Procédé selon la revendication 1 ou 2, **caractérisé en ce que** le matériau d'emballage est imperméable aux gaz.

4. Appareillage pour mettre en oeuvre le procédé selon la revendication 1, comportant un tube d'embossage guidant un produit à emballer dans un emballage tubulaire, ainsi que des moyens pour appliquer la couche de fumée liquide sur une face du matériau d'emballage, **caractérisé en ce qu'**on prévoit, coaxialement à l'orifice de sortie (16) du tube d'embossage (10), un poste (41) de formation de boyau, qui façonne un matériau d'emballage (48) sous forme de bande pour donner un boyau (12) qui entoure d'une manière concentrique le tube d'embossage, et qui refoule le matériau d'emballage vers l'orifice de sortie (16), un poste de revêtement (31) étant prévu immédiatement en avant de ce dernier poste.

5. Appareillage selon la revendication 4, **caractérisé en ce qu'**un dispositif de séchage (40) est disposé entre le poste (41) de formation de boyau et le poste de revêtement (31).
